# EUROPÄISCHE PATENTSCHRIFT

(11) **EP 1 160 225 B1**
(45) Veröffentlichungstag und Bekanntmachung des Hinweises auf die Patenterteilung: **29.09.2004**
(21) Anmeldenummer: 01110916.2
(22) Anmeldetag: 05.05.2001
(51) Int. Cl.: C04B 41/88, C03C 17/10, C04B 41/51

(54) **Glanzedelmetallpräparat zur Herstellung von Edelmetalldekoren auf silikatischen Substraten**
Glossy noble-metal preparation for making noble-metal decorations on silicate substrates
Préparation de métal noble brillant pour décorations à base de métal noble sur substrats de silicates

(30) Priorität: 30.05.2000 DE 10026609
(43) Veröffentlichungstag der Anmeldung: 05.12.2001
(73) Patentinhaber: W.C. Heraeus GmbH & Co. KG, 63450 Hanau (DE)
(72) Erfinder: Landgraf, Günter, Dr., 63454 Hanau (DE); Wenzel, Patrick, 63808 Haibach (DE); Wissel, Sabine, 63796 Kahl (DE)
(74) Vertreter: Kühn, Hans-Christian

(56) Entgegenhaltungen:
- EP-A- 0 345 993
- EP-A- 0 972 793

## Beschreibung

Die Erfindung betrifft ein Glanzedelmetallpräparat zur Herstellung von Edelmetalldekoren auf silikatischen Substraten.

Glanzedelmetallpräparate, insbesondere Glanzgoldpräparate, zur Dekoration von silikatischen Substraten sind seit längerer Zeit bekannt. Üblicherweise bestehen die Präparate aus organischen Goldverbindungen und ggf. weiteren organischen Edelmetallverbindungen, organischen Nichtedelmetallverbindungen und einem organischen Trägermaterial auf Basis von Harzen und Lösungsmitteln.

Als organische Edelmetallverbindungen sind die Sulforesinate, Mercaptide, Carboxylate, Mercaptoaminocarboxylate, Mercaptocarboxylsäureester oder ähnliche Verbindungen gebräuchlich.

Als Haftvermitler oder "Flussmittel" werden beispielsweise die Resinate, Sulforesinate, Carboxylate oder Alkoholate der Elemente Rhodium, Chrom, Vanadium, Silicium, Bismut, Bor, Zinn, Nickel, Aluminium eingesetzt. Diese Haftvermittler zersetzen sich beim Einbrennen zu den jeweiligen Oxiden, die die Haftung des Edelmetallfilms zum Substrat sicherstellen und auch den Farbton, den Glanz und die mechanischen und chemischen Eigenschaften des eingebrannten Films beeinflussen.

Für das organische Trägermaterial werden als Lösungsmittel meist Terpenkohlenwasserstoffe wie Terpentinöl, Pineöl, Lavendelöl, Rosmarinöl, Pfefferminzöl, aber auch sonstige organische Lösungsmittel wie aromatische Kohlenwasserstoffe, Alkohole, Ester, Ketone, Halogenkohlenwasserstoffe verwendet.

Als Harze zur Optimierung der Applikations- und Dekoreigenschaften, beispielsweise des Glanzes, des Farbtons und der chemischen Beständigkeit, und der thermischen Zersetzungseigenschaften finden Naturharze wie Kolophonium und seine Derivate, Dammarharz, Phenolharze, Asphalt, Maleinatharze, Ketonharze, Alkydharze, Nitrocellulose, Aminoharze, Amidharze Verwendung. Weiter kann das organische Trägermaterial Weichmacher, Verdicker, Verlaufsmittel, Entschäumer, Tenside Farbstoffe und andere Verarbeitungshilfsmittel enthalten.

Für die Dekoration silikatischer Materialien mit Motiven hat sich insbesondere das Siebdruckverfahren bewährt, wobei sowohl der direkte Siebdruck auf das Substrat als auch die Dekoration über den indirekten Siebdruck mittels Abziehbild eingesetzt wird. Für den Siebdruck werden Edelmetallpräparate in pastöser Form eingesetzt, wie sie beispielsweise in der DE 198 31 141 A1 beschrieben sind.

Für die Produktion großer Stückzahlen dekorierter silikatischer Materialien, insbesondere von Trinkgläsern oder Flaschen, hat sich besonders das Verfahren der Bedruckung mit thermoplastischen Farben durchgesetzt. Bei diesem Verfahren werden Farben eingesetzt, deren Trägermedium derart beschaffen ist, dass es bei Raumtemperatur fest ist, bei einer Temperatur von ca. 60 bis 100 °C, bevorzugt bei ca. 70 °C schmelzflüssig ist und beim Kontakt mit einer kalten insbesondere silikatischen Oberfläche sofort wieder erstarrt. Diese Eigenschaft erlaubt es, an mehreren hintereinandergereihten Druckstationen mehrere Druckfarben auf ein Substrat in einem kurzen Zeitintervall, beispielsweise 60 Drucke pro Minute, aufzubringen, ohne dass die nachfolgende Farbe die vorher aufgebrachte Farbe beschädigt.

Ein thermoplastisches Edelmetallpräparat, das sich für diese Anwendung eignet, wurde bereits im US-Patent 3,092,504 beschrieben. Das Präparat nach dieser Erfindung ist dadurch gekennzeichnet, dass es eine lösliche organische Edelmetallverbindung und ein thermoplastisches Medium enthält, welches bei Raumtemperatur fest ist und zwischen 120 F bis 240 F schmilzt und beim Kontakt mit der dekorierten Oberfläche sofort erstarrt. Weiter ist dieses Präparat dadurch gekennzeichnet, dass es organische Edelmetallverbindungen, lösliche Flussmittel und 20 bis 80 % eines thermoplastischen Mediums bestehend aus Harzen und Wachsen enthält. Die Präparate gemäß der Erfindung erstarren schnell nach dem Druck auf dem Substrat zu einem klebefreien Film und bilden nach dem Einbrennen bei 1.100 F einen hochglänzenden Golddekor.

Nachteilig an den Präparaten ist, dass sie bei der Kombination mit thermoplastischen Glasemailfarben in Dekoren keine ausreichende Verträglichkeit zeigen, d.h. beim Einbrennen kommt es infolge von Wechselwirkungen mit den direkt in Kontakt befindlichen Glasemailfarben zu Fehlern wie Schrumpfungserscheinungen, Blasenbildung und Mattierungen. Weiterhin ist die Rheologie der Pasten nicht optimal, da sie nicht die erforderliche Strukturviskosität aufweisen, um einen sehr konturenscharfen Druck feiner Details zu ermöglichen. Ein weiterer Nachteil ist, dass die Spülmaschinenbeständigkeit der Golddekore nicht den Anforderungen entspricht, die von den Herstellern dekorierter Artikel gestellt werden.

Aus dem Vorgenannten ergibt sich das Problem, mit Hilfe eines neuartigen Glanzedelmetallpräparates die oben genannten Nachteile zumindest teilweise zu beseitigen, insbesondere ein Präparat bereitzustellen, das hinsichtlich einer rationellen Dekoration von großen Stückzahlen für mehrfarbige und mit Edelmetall dekorierte silikatische Träger, insbesondere Glas, geeignet ist. Das Präparat soll eine gute Farbenverträglichkeit aufweisen, einen präzisen Druck feinster Strukturen ermöglichen, nach dem Druck auf dem Substrat innerhalb von Sekundenbruchteilen erstarren und auf verschiedensten Glastypen einen hohen Glanz und eine hellgelbe Vorderund Rückseite ohne Rotverfärbungen nach dem Einbrennen zeigen. Weiterhin ist eine gute Spülmaschinenbeständigkeit wünschenswert.

Dieses Problem wird erfindungsgemäß durch ein Glanzedelmetallpräparat nach Anspruch 1 gelöst.

Das erfindungsgemäße Glanzedelmetallpräparat zur Herstellung von Edelmetalldekoren auf silikatischen Substraten weist ein Bindemittelsystem, ein thermoplastisches Medium und mindestens ein Edelmetall als lösliche organische Edelmetallverbindung auf.

Das Bindemittelsystem besteht aus
a) bezogen auf das Präparat 1 bis 20 Gewichts-% mindestens eines Harnstoff-Formaldehydharzes und/oder mindestens eines modifizierten Harnstoff-Formaldehydharzes; und
a) bezogen auf das Präparat 2 - 20% mindestens eines Stoffes aus der Gruppe: Asphalt; Kolophonium; Kolophoniumester; kolophoniummodifizierte Harze; Phenolharze; Maleinatharze; Ketonharze; natürliche Baumharze und deren Umwandlungsprodukte; und die Reaktionsprodukte der genannten Harze mit Schwefel,
und die Mischung der Bestandteile wird gegebenenfalls unter Zusatz von als Polymerisationskatalysatoren wirkenden Stoffen bei einer Temperatur von 80 bis 150°C zur Reaktion gebracht, um eine Paste zu erzeugen, die bei Raumtemperatur fest oder halbfest ist und bei einer Temperatur von 40° bis 120 °C in den schmelzflüssigen Zustand übergeht.

Das thermoplastische Medium besteht aus mindestens einer organischen Verbindung mit Schmelzpunkt von 40 bis 160°C und macht, bezogen auf das Präparat, einen Gesamtanteil von 10 bis 60 Gewichts-% aus, bevorzugt zur Optimierung der Druckeigenschaften 25 bis 60 Gewichts-%.

Unter dem Begriff thermoplastisches Medium" sollen natürliche und künstlich gewonnene Stoffe verstanden werden, die folgende Eigenschaften aufweisen:
Bei 20 °C fest bis brüchig hart, grob bis feinkristallin, zwischen 50 und 100 °C ohne Zersetzung schmelzend, schon wenig oberhalb des Schmelzpunktes verhältnismäßig niedrigviskos und nicht fadenziehend. Im besonderen kann es sich um langkettige aliphatische oder aromatische Carbonsäuren oder deren Veresterungsprodukte; Paraffinwachse; Polyalkylenglykole; Amidwachse; Montanwachse; mono- oder polyfunktionelle Alkohole; aromatische oder aliphatische Ketone; sowie ein- oder mehrfach mit Hydroxy-, Alkoxy-, Aryl-, Amid-, Halogen-, Ester- oder Nitrogruppen substituierte Aromaten handeln, die gegebenenfalls als Mischungen eingesetzt werden.

Das Präparat weist 4 bis 20 Gewichts-% mindestens eines Edelmetalls auf. Dieser Wert bezieht sich auf das reine Edelmetall als solches. Das Edelmetall selbst liegt jedoch in Form mindestens einer löslichen organischen Edelmetallverbindung vor. Edelmetalle sind insbesondere Gold, Silber, Platin und Palladium.

Unter dem Begriff organische Edelmetallverbindungen" sollen alle Edelmetallverbindungen verstanden werden, insbesondere Silber-, Gold-, Platin- und Palladiumverbindungen, die sich in einem organischen oder anorganischen, insbesondere wässrigen Trägermaterial lösen oder dispergieren und sich thermisch zu den jeweiligen Metallen zersetzen lassen; vornehmlich Resinate, Sulforesinate, Carboxylate, aromatische und aliphatische Mercaptide, Mercaptocarboxylsäureester, Mercaptoaminocarboxylate sind geeignete Stoffklassen.

### Die nachfolgenden Ausführungsformen haben sich in vorteilhafter Weise in der Praxis bewährt::

Dem Bindemittelsystem wird Schwefel und/oder mindestens eine organische schwefelhaltige Verbindung und/oder Amine und/oder Säuren als Gelierhilfsmittel zugesetzt, und bezogen auf das Präparat zusätzlich bis 3 Gewichts-% Schwefel eingebracht.

Das Bindemittelsystem besteht aus, bezogen auf das Präparat, 2 bis 20, bevorzugt 8 bis 20 Gewichts-% eines geschwefelten Phenolharzes und/oder Dammarharzes mit einem bezogen auf das geschwefelte Harz eingebrachten Schwefelgehalt in Höhe von 10 bis 30 Gewichts-% und bezogen auf das Präparat 1bis 20, bevorzugt 1 bis 15 Gewichts-% mindestens eines Hamstoff-Formaldehydharzes und/oder mindestens eines modifizierten Harnstoff-Formaldehydharzes. Vor allem in der bevorzugten Ausführungsform stellen sich auf diese Art und Weise ausgezeichnete rheologische Eigenschaften ein.

Das Bindemittelsystem enthält, bezogen auf das Präparat, zusätzlich bis zu 10 Gewichts-% mindestens eines Ketonharzes und/oder modifizierten Ketonharzes, um optimale optische und chemisch-mechanische Eigenschaften zu erhalten.

Das Bindemittelsystem enthalten, bezogen auf das Präparat, zusätzlich bis zu 15 Gewichts-% Asphalt, um optimale optische und chemisch-mechanische Eigenschaften zu erhalten.

Das Bindemittelsystem enthalten, bezogen auf das Präparat, zusätzlich bis zu 10 Gewichts-% mindestens einer Carbonsäure mit einer zersetzungsfreien Schmelzpunkttemperatur von T > +100 °C und/oder deren Veresterungsprodukte mit einer zersetzungsfreien Schmelzpunkttemperatur von T > +100 °C, um die Stabilität des wischfesten Dekors zu erhöhen.

Das Bindemittelsystem enthält, bezogen auf das Präparat, zusätzlich bis zu 10 Gewichts-% mindestens eines Alkydharzes und/oder modifizierten Alkydharzes, um optimale optische und chemisch-mechanische Eigenschaften zu erhalten.

Das Bindemittelsystem enthält, bezogen auf das Präparat, zusätzlich bis zu 10 Gewichts-% mindestens eines Kolophoniumharzes und/oder modifizierten Kolophoniumharzes, um optimale optische und chemisch-mechanische Eigenschaften zu erhalten.

Das Bindemittelsystem enthält, bezogen auf das Präparat, zusätzlich bis zu 10 Gewichts-% Farbstoffe, Thixotropierungsmittel, Additive oder andere Verarbeitungshilfsmittel. Dafür kommen in Frage: Farbstoffe, insbesondere Azofarbstoffe, Phthalocyanide, zur Kenntlichmachung des Dekors auf dunklen Untergründen, Thixotropierungsmittel, insbesondere modifizierte Rhizinusöl-Derivate, Polyamide, hydrierte und mikronisierte Polyethylenwachse und Polyurethane, zur Optimierung der rheologischen Eigenschaften, Additive, insbesondere silikonhaltige und silikonfreie Polymere, Polysiloxane, modifizierte Siloxane, Naturharze, elektroneutrale Aminsalze, Recitine, zur Optimierung der Verarbeitungseigenschaften oder andere Verarbeitungshilfsmittel.

Das Bindemittelsystem enthält zweckmäßig, bezogen auf das Präparat bis zu 5 Gew.% eines Polymerisationskatalysators. Dieser entstammt bevorzugt der Gruppe der aliphatischen Carbonsäuren wie Essigsäure, der nicht oxidierenden Mineralsäuren wie Salzsäure oder Phosphorsäure oder, der aromatischen Carbonsäuren wie Benzoesäure, der primären Amine und Basen wie Ammoniak, Butylamin, Triethylamin, der Peroxide wie Natriumperoxid und der Vulkanisationspolymerisatoren einschließlich Schwefel.

Es wird mindestens ein Edelmetall in Form mindestens einer organischen Verbindung aus der Gruppe Resinate, Sulforesinate, Carboxylate, aromatische und aliphatische Mercaptide, Mercaptocarboxylsäureester, Mercaptoaminocarboxylate eingesetzt, wobei der Edelmetallgehalt, bezogen auf das Präparat, 5 bis 18 Gewichts-% beträgt, um sowohl physikalischen als auch wirtschaftlichen Belangen gerecht zu werden.

Es sind mindestens zwei Elemente aus der Gruppe Rh, Cu, Co, Zr, Bi, Cr, Si, B, Al, Ti, Ca, V, Zn, Fe, Ce, Mo, Os, In, Ba, Ta, W, Li, Na, K, Ca, Mn, Ni, Ir, Ge, Pb, Sr, Ru, Ge und Mg in Form organischer Verbindungen enthalten, wobei der Gehalt dieser Metalle jeweils bis 0,4 Mol pro Mol Edelmetall beträgt. Diese Verbindungen fungieren insbesondere als sogenannte "Haftvermittler".

Unter dem Begriff "Haftvermittler" sollen alle Nichtedelmetallelemente verstanden werden, die sich in einem organischen oder anorganischen insbesondere wässrigen Trägermaterial lösen oder dispergieren und sich thermisch unabhängig von ihrer Struktur zu den jeweiligen Metalloxiden zersetzen lassen; vornehmlich Carboxylate, Resinate, Sulforesinate, Alkoholate, Salze oder Komplexe der jeweiligen Elemente, insbesondere der Metalle Rh, Cu, Co, Zr, Bi, Cr, Si, B, Al, Ti, Ca, V, Zn, Fe, Ce, Mo, Os, In, Ba, Ta, W, Li, Na, K, Ca, Mn, Ni, Ir, Ge, Pb, Sr, Ru, Ge und Mg.

Dem Bindemittel wird zweckmäßig Schwefel und/oder mindestens eine organische schwefelhaltige Verbindung, beispielsweise Dithioamide, und/oder Amine und/oder Säuren als Gelierhilfsmittel zur Verbesserung der rheologischen Eigenschaften beim Drucken zugesetzt, wobei bezogen auf das Präparat zusätzlich bis 3 Gewichts-% Schwefel eingebracht wird.

Schließlich ist es vorteilhaft, dass das Bindemittel, bezogen auf das Präparat, bis zu 10 Gewichts-% zusätzlich Farbstoffe, insbesondere Azofarbstoffe, Phthalocyanide, zur Kenntlichmachung des Dekors auf dunklen Untergründen, Thixotropierungsmittel, insbesondere modifizierte Rhizinusöl-Derivate, Polyamide, hydrierte und mikronisierte Polyethylenwachse und Polyurethane, zur Optimierung der rheologischen Eigenschaften, Additive, insbesondere silikonhaltige und silikonfreie Polymere, Polysiloxane, modifizierte Siloxane, Naturharze, elektroneutrale Aminsalze, Recitine, zur Optimierung der Verarbeitungseigenschaften oder andere Verarbeitungshilfsmittel enthält.

Das erfindungsgemäße Glanzedelmetallpräparat wird vorzugsweise durch thermoplastisches Drucken eines solchen Präparates auf ein silikatisches Substrat und einem anschließenden Einbrennen auf dem Substrat hergestellt.

Das nachfolgende Beispiel dient zur Erläuterung der Erfindung:

| Beispiel eines thermoplastischen Glanzedelmetallpräparates: | |
|---|---|
| Goldmercaptid (50 % Au) | 20,00 Gewichts-% |
| Siliciumresinat, gelöst in Pineoel (10 % Si) | 1,00 Gewichts-% |
| Rhodiumresinat, gelöst in Pineoel (8 % Rh) | 0,40 Gewichts-% |
| Kupferresinat, gelöst in Pineoel (5 % Cu) | 0,20 Gewichts-% |
| Chromresinat, gelöst in Pineoel (10 % Cr) | 1,00 Gewichts-% |
| Vanadiumresinat, gelöst in Pineoel (2 % V) | 2,00 Gewichts-% |
| Bismutresinat, gelöst in Pineoel (10 % Bi) | 1,00 Gewichts-% |
| Stearylalkohol | 49,90 Gewichts-% |
| Harnstoff-Formaldehydharz, gelöst in Testbenzin (60 %) | 7,00 Gewichts-% |
| geschwefeltes Phenolharz (Schwefelgehalt 20 %) | 15,00 Gewichts-% |
| Silbercarboxylat (39 % Ag) | 2,50 Gewichts-% |

Die Komponenten werden bei 130 °C zur Reaktion gebracht und die Lösungsmittelverluste mit Stearylalkohol ausgeglichen. Die Paste wird mit einem beheizten Stahl- oder metallisierten Polyestergewebe auf ein Trinkgefäß in Angrenzung bzw. gering überlappend an thermoplastische keramische Farben aufgetragen und bei 600 °C eingebrannt.

Um den spezifischen Anforderungen bezüglich der Druck- und Einbrenneigenschaften der Paste gerecht zu werden, kann das oben beschriebene Präparat auch in mehreren Stufen hergestellt werden. Hierbei ist es beispielsweise möglich, die metallorganischen Verbindungen, die Goldverbindung sowie den Stearylalkohol und das Harnstoff-Formaldehydharz in einem ersten Schritt bei 120 °C einzuengen, wobei die Lösungsmittel der einzelnen Verbindungen aus dem System entweichen. Nach schrittweiser Zugabe des geschwefelten Harzes und der anschließenden Zugabe der Silberverbindung geliert die Paste. Auch durch Zugabe von Gelierhilfsmitteln, beispielsweise von Schwefel oder schwefelhaltigen Verbindungen, sowie Verdickungsoder Thixotropierungsmitteln lassen sich die Pasteneigenschaften optimieren und gewünschte rheologische Eigenschaften einstellen. Die Paste wird mit einem beheizten Stahl- oder metallisierten Polyestergewebe auf ein Trinkgefäß in Angrenzung bzw. gering überlappend an thermoplastische keramische Farben aufgetragen und bei 600 °C eingebrannt. Es bilden sich gelbgoldene, hochglänzende Goldfilme mit sehr guter Haftung und hervorragender Spülmaschinenbeständigkeit. Der Goldfilm verändert weder seinen Glanz, Farbton noch seine Spülmaschinenbeständigkeit durch die Angrenzung bzw. geringe Überlappung auf der Farbe.

## Patentansprüche

1. Thermoplastisches Glanzedelmetallpräparat enthaltend ein Bindemittelsystem, ein thermoplastisches Medium und mindestens ein Edelmetall als lösliche organische Edelmetallverbindung, **dadurch gekennzeichnet, dass** das Bindemittelsystem besteht aus:
a) bezogen auf das Präparat 1 bis 20 Gewichts-% mindestens eines Hamstoff-Formaldehydharzes und/oder mindestens eines modifizierten Hamstoff-Formaldehydharzes; und
b) bezogen auf das Präparat 2 - 20% mindestens eines Stoffes der Gruppe: Asphalt; Kolophonium; Kolophoniumester; kolophoniummodifizierte Harze; Phenolharze; Maleinatharze;
Ketonharze; natürliche Baumharze und deren Umwandlungsprodukte; und die Reaktionsprodukte der genannten Harze mit Schwefel,
und die Mischung der Bestandteile gegebenenfalls unter Zusatz von als Polymerisationskatalysatoren wirkenden Stoffen bei einer Temperatur zwischen 80 - 150°C zur Reaktion gebracht wird, um eine Paste zu erzeugen, die bei Raumtemperatur fest oder halbfest ist und bei einer Temperatur zwischen 40°C - 120 °C in den schmelzflüssigen Zustand übergeht.

2. Thermoplastisches Glanzedelmetallpräparat gemäß Anspruch 1, **dadurch gekennzeichnet, dass** es als thermoplastisches Medium 10 bis 60 Gew.% mindestens einer organischen Verbindung mit Schmelzpunkt von 40 bis 160°C enthält.

3. Thermoplastisches Glanzedelmetallpräparat gemäß Anspruch 2, **dadurch gekennzeichnet, dass** die organische Verbindung der Gruppe der langkettigen aliphatischen oder aromatischen Carbonsäuren oder deren Veresterungsprodukte; der Paraffinwachse; der Polyalkylenglykole; der Amidwachse; der Montanwachse; der mono- oder polyfunktionellen Alkohole; der aromatischen oder aliphatischen Ketone; sowie der ein- oder mehrfach mit Hydroxy-, Alkoxy-, Aryl-, Amid-, Halogen-, Ester- oder Nitrogruppen substituierten Aromaten angehört.

4. Thermoplastisches Glanzedelmetallpräparat gemäß einem der Ansprüche 1 bis 3, **dadurch gekennzeichnet, dass** bezogen auf das Präparat 4 bis 20 Gewichts-% mindestens eines Edelmetalls in Form mindestens einer löslichen organischen Edelmetallverbindung vorliegen.

5. Thermoplastisches Glanzedelmetallpräparat nach einem der Ansprüche 1 bis 4, **dadurch gekennzeichnet, dass** die organische Edelmetallverbindung der Gruppe der Resinate, Sulforesinate, Carboxylate, aromatische und aliphatische Mercaptide, Mercaptocarboxylsäureester und Mercaptoaminocarboxylate angehört.

6. Thermoplastisches Glanzedelmetallpräparat gemäß Anspruch 1, **dadurch gekennzeichnet, dass** das Bindemittelsystem
c) bezogen auf das Präparat bis zu 5 Gew.% eines Polymerisationskatalysators enthält.

7. Thermoplastisches Glanzedelmetallpräparat gemäß Anspruch 6, **dadurch gekennzeichnet, dass** der Polymerisationskatalysator der Gruppe der aliphatischen Carbonsäuren, der nicht oxidierenden Mineralsäuren, der aromatischen Carbonsäuren, der primären Amine, Basen, der Peroxide und der Vulkanisationspolymerisatoren einschließlich Schwefel angehört.

8. Thermoplastisches Glanzedelmetallpräparat nach einem der Ansprüche 1 bis 7, **dadurch gekennzeichnet, dass** dem Bindemittelsystem Schwefel und/oder mindestens eine organische schwefelhaltige Verbindung und/oder Amine und/oder Säuren als Gelierhilfsmittel zugesetzt und bezogen auf das Präparat zusätzlich bis 3 Gewichts-% Schwefel eingebracht wird.

9. Thermoplastisches Glanzedelmetallpräparat gemäß einem der Ansprüche 1 bis 8, **dadurch gekennzeichnet, dass** das Bindemittelsystem
b) bezogen auf das Präparat 2 bis 20 Gewichts-% eines geschwefelten Phenolharzes und/oder Dammarharzes mit einem bezogen auf das geschwefelte Harz eingebrachten Schwefelgehalt in Höhe von 10 bis 30 Gewichts-%
enthält.

10. Thermoplastisches Glanzedelmetallpräparat nach einem der Ansprüche 1 bis 9, **dadurch gekennzeichnet, dass** das Bindemittelsystem
a) bezogen auf das Präparat 1 bis 15 Gewichts-% mindestens eines Harnstoff-Formaldehyd-harzes und/oder mindestens eines modifizierten Harnstoff-Formaldehydharzes und
b) bezogen auf das Präparat 8 bis 20 Gewichts-% eines geschwefelten Phenolharzes und/oder Dammarharzes mit einem bezogen auf das geschwefelte Harz eingebrachten Schwefelgehalt in Höhe von 10 bis 30 Gewichts-%
enthält.

11. Thermoplastisches Glanzedelmetallpräparat nach einem der Ansprüche 1 bis 10, **dadurch gekennzeichnet, dass** das Bindemittelsystem, bezogen auf das Präparat, bis zu 15 Gewichts-% Asphalt enthält.

12. Thermoplastisches Glanzedelmetallpräparat nach einem der Ansprüche 1 bis 10, **dadurch gekennzeichnet, dass** das Bindemittelsystem bezogen auf das Präparat zusätzlich bis zu 10 Gewichts-% mindestens einer Carbonsäure mit einer zersetzungsfreien Schmelzpunkttemperatur T > +100 °C und/oder deren Veresterungsprodukte mit einer zersetzungsfreien Schmelzpunkttemperatur T > + 100 °C enthält.

13. Thermoplastisches Glanzedelmetallpräparat nach einem der Ansprüche 1 bis 12, **dadurch gekennzeichnet, dass** das Bindemittelsystem bezogen auf das Präparat zusätzlich bis zu 10 Gewichts-% Farbstoffe, Thixotropierungsmittel, Additive oder andere Verarbeitungshilfsmittel enthält.

14. Thermoplastisches Glanzedelmetallpräparat nach einem der Ansprüche 1 bis 13, **dadurch gekennzeichnet, dass** mindestens zwei Elemente aus der Gruppe Rh, Cu, Co, Zr, Bi, Cr, Si, B, Al, Ti, Ca, V, Zn, Fe, Ce, Mo, Os, In, Ba, Ta, W, Li, Na, K, Ca, Mn, Ni, Ir, Ge, Pb, Sr, Ru, Ge und Mg in Form organischer Verbindungen enthalten sind, wobei der Gehalt dieser Metalle jeweils bis 0,4 Mol pro Mol Edelmetall beträgt.

15. Verfahren zur Herstellung eines Edelmetalldekor aufweisenden silikatischen Substrats, **gekennzeichnet durch**:
- thermoplastisches Drucken eines Glanzedelmetallpräparates nach einem der Ansprüche 1 bis 14 auf ein silikatisches Substrat; und
- Einbrennen des Präparates auf dem Substrat.

16. Verwendung eines thermoplastischen Glanzedelmetallpräparates nach einem der Ansprüche 1 bis 14 zur Herstellung von Edelmetalldekoren auf silikatischen Substraten durch thermoplastisches Drucken und anschließendes Einbrennen.

17. Edelmetalldekor aufweisendes silikatisches Substrat, hergestellt nach einem Verfahren nach Anspruch 15.

## Claims

1. Thermoplastic bright noble metal preparation containing a binder system, a thermoplastic medium and at least one noble metal as a soluble organic noble metal compound, **characterized in that** the binder system consists of:
a) based on the preparation, 1 to 20% by weight of at least one urea/formaldehyde resin and/or at least one modified urea/formaldehyde resin; and
b) based on the preparation, 2-20% of at least one substance from the group consisting of: asphalt; rosin; rosin ester; rosin-modified resins; phenol resins; maleate resins; ketone resins; natural tree resins and the transformation products thereof; and the reaction products of said resins with sulphur,
and the mixture of the components, optionally with addition of substances acting as polymerization catalysts, is reacted at a temperature of 80 -
150°C in order to produce a paste which is solid or semisolid at room temperature and is transformed into the molten state at a temperature of 40°C - 120°C.

2. Thermoplastic bright noble metal preparation according to Claim 1, **characterized in that** it contains, as the thermoplastic medium, 10 to 60% by weight of at least one organic compound having a melting point of 40 to 160°C.

3. Thermoplastic bright noble metal preparation according to Claim 2, **characterized in that** the organic compound belongs to the group consisting of the longchain aliphatic or aromatic carboxylic acids or the esterification products thereof; the paraffin waxes; polyalkylene glycols; the amide waxes; the montan waxes; the mono- or polyfunctional alcohols; the aromatic or aliphatic ketones; and the aromatics mono- or polysubstituted by hydroxyl, alkoxy, aryl, amido, halogen, ester or nitro groups.

4. Thermoplastic bright noble metal preparation according to any of Claims 1 to 3, **characterized in that**, based on the preparation, 4 to 20% by weight of at least one noble metal in the form of at least one soluble organic noble metal compound are present.

5. Thermoplastic bright noble metal preparation according to any of Claims 1 to 4, **characterized in that** the organic noble metal compound belongs to the group consisting of the resinates, sulphoresinates, carboxylates, aromatic and aliphatic mercaptides, mercaptocarboxylic esters and mercaptoaminocarboxylates.

6. Thermoplastic bright noble metal preparation according to Claim 1, **characterized in that** the binder system contains
c) based on the preparation, up to 5% by weight of a polymerization catalyst.

7. Thermoplastic bright noble metal preparation according to Claim 6, **characterized in that** the polymerization catalyst belongs to the group consisting of the aliphatic carboxylic acids, the nonoxidizing mineral acids, the aromatic carboxylic acids, the primary amines, bases, the peroxides and the vulcanizing agents, including sulphur.

8. Thermoplastic bright noble metal preparation according to any of Claims 1 to 7, **characterized in that** sulphur and/or at least one organic sulphur-containing compound and/or amines and/or acids are added as gelling auxiliaries to the binder system and, based on the preparation, additionally up to 3% by weight of sulphur is introduced.

9. Thermoplastic bright noble metal preparation according to any of Claims 1 to 8, **characterized in that** the binder system contains
b) based on the preparation, 2 to 20% by weight of a sulphurized phenol resin and/or dammar resin having a sulphur content, introduced on the basis of the sulphurized resin, of 10 to 30% by weight.

10. Thermoplastic bright noble metal preparation according to any of Claims 1 to 9, **characterized in that** the binder system contains
a) based on the preparation, 1 to 15% by weight of at least one urea/formaldehyde resin and/or at least one modified urea/formaldehyde resin and
b) based on the preparation, 8 to 20% by weight of a sulphurized phenol resin and/or dammar resin having a sulphur content, introduced on the basis of the sulphurized resin, of 10 to 30% by weight.

11. Thermoplastic bright noble metal preparation according to any of Claims 1 to 10, **characterized in that** the binder system contains, based on the preparation, up to 15% by weight of asphalt.

12. Thermoplastic bright noble metal preparation according to any of Claims 1 to 10, **characterized in that** the binder system contains, based on the preparation, additionally up to 10% by weight of at least one carboxylic acid having a decomposition-free melting point T > +100°C and/or the esterification products thereof having a decomposition-free melting point T > +100°C.

13. Thermoplastic bright noble metal preparation according to any of Claims 1 to 12, **characterized in that** the binder system contains, based on the preparation, additionally up to 10% by weight of dyes, thixotropic agents, additives or other processing auxiliaries.

14. Thermoplastic bright noble metal preparation according to any of Claims 1 to 13, **characterized in that** at least two elements from the group consisting of Rh, Cu, Co, Zr, Bi, Cr, Si, B, Al, Ti, Ca, V, Zn, Fe, Ce, Mo, Os, In, Ba, Ta, W, Li, Na, K, Ca, Mn, Ni, Ir, Ge, Pb, Sr, Ru, Ge and Mg in the form of organic compounds are contained, the content of these metals being in each case up to 0.4 mol per mole of noble metal.

15. Process for the preparation of a silicate substrate having noble metal decoration, **characterized by**:
- thermoplastic printing of a bright noble metal preparation according to any of Claims 1 to 14 on a silicate substrate; and
- firing of the preparation on the substrate.

16. Use of a thermoplastic bright noble metal preparation according to any of Claims 1 to 14 for the production of noble metal decorations on silicate substrates by thermoplastic printing and subsequent firing.

17. Silicate substrate having noble metal decoration, produced by a process according to Claim 15.

## Revendications

1. Préparation thermoplastique de métal noble brillant contenant un système liant, un milieu thermoplastique et au moins un métal noble sous forme de composé organique soluble de métal noble, **caractérisé en ce que** le système liant consiste en :
a) par rapport à la préparation 1 à 20 % en masse d'au moins une résine urée-formaldéhyde et/ou d'au moins une résine urée-formaldéhyde modifiée ; et
b) par rapport à la préparation 2-20 % d'au moins une substance du groupe : asphalte ; colophane ; ester de colophane ; résines modifiées à la colophane ; résines phénoliques ; résines de maléate ;
résines cétoniques ; résines d'arbres naturelles et leurs produits de conversion ; et les produits réactionnels des résines citées avec le soufre ;
et le mélange des constituants et mis à réagir à une température de 80-150°C éventuellement avec addition de substances agissant comme des catalyseurs de polymérisation, pour produire une pâte qui est solide ou semi-solide à la température ambiante et qui passe à l'état fondu à une température de 40°C-120°C.

2. Préparation thermoplastique de métal noble brillant selon la revendication 1, **caractérisée en ce qu'**elle contient comme milieu thermoplastique 10 à 60 % en masse d'au moins un composé organique d'un point de fusion de 40 à 160°C.

3. Préparation thermoplastique de métal noble brillant selon la revendication 2, **caractérisée en ce que** le composé organique appartient au groupe des acides carboxyliques aliphatiques ou aromatiques à longue chaîne ou de leurs produits d'estérification ; des cires de paraffine ; des polyalkylèneglycols ; des cires d'amide ; des cires minérales ; des alcools mono- ou polyfonctionnels ; des cétones aromatiques ou aliphatiques ainsi que des aromatiques substitués une ou plusieurs fois par des groupes hydroxyle, alcoxy, aryle, amide, halogène, ester ou nitro.

4. Préparation thermoplastique de métal noble brillant selon l'une des revendications 1 à 3 **caractérisée en ce que**, par rapport à la préparation, 4 à 20 % en masse d'au moins un métal noble est présent sous forme d'au moins un composé organique soluble du métal noble.

5. Préparation thermoplastique de métal noble brillant selon l'une des revendications 1 à 4, **caractérisée en ce que** le composé organique du métal noble appartient au groupe des résinates, des sulforésinates, des carboxylates, des mercaptides aromatiques et aliphatiques, des esters d'acide mercaptocarboxylique et des mercaptoaminocarboxylates.

6. Préparation thermoplastique de métal noble brillant selon la revendication 1, **caractérisée en ce que** le système liant contient :
c) par rapport à la préparation jusqu'à 5 % en masse d'un catalyseur de polymérisation.

7. Préparation thermoplastique de métal noble brillant selon la revendication 6, **caractérisée en ce que** le catalyseur de polymérisation appartient au groupe des acides carboxyliques aliphatiques, des acides minéraux non oxydants, des acides carboxyliques aromatiques, des amines primaires, des bases, des peroxydes et des agents de polymérisation de vulcanisation y compris le soufre.

8. Préparation thermoplastique de métal noble brillant selon l'une des revendications 1 à 7, **caractérisée en ce que** du soufre et/ou au moins un composé soufré organique et/ou des amines et/ou des acides sont ajoutés au système liant comme auxiliaires de gélification et en outre jusqu'à 3 % en masse de soufre par rapport à la préparation sont introduits.

9. Préparation thermoplastique de métal noble brillant selon l'une des revendications 1 à 8, **caractérisée en ce que** le système liant contient
b) par rapport à la préparation 2 à 20 % en masse d'une résine phénolique soufrée et/ou d'une résine dammar soufrée ayant une teneur en soufre introduite à hauteur de 10 à 30 % en masse par rapport à la résine soufrée.

10. Préparation thermoplastique de métal noble brillant selon l'une des revendications 1 à 9, **caractérisée en ce que** le système liant contient
a) par rapport à la préparation 1 à 15 % en masse d'au moins une résine urée-formaldéhyde et/ou d'au moins une résine urée-formaldéhyde modifiée et
b) par rapport à la préparation 8 à 20 % en masse d'une résine phénolique soufrée et/ou d'une résine dammar soufrée ayant une teneur en soufre introduite à hauteur de 10 à 30 % en masse par rapport à la résine soufrée.

11. Préparation thermoplastique de métal noble brillant selon l'une des revendications 1 à 10, **caractérisée en ce que** le système liant contient jusqu'à 15 % en masse d'asphalte par rapport à la préparation.

12. Préparation thermoplastique de métal noble brillant selon l'une des revendications 1 à 10, **caractérisée en ce que** le système liant contient en outre par rapport à la préparation jusqu'à 10 % en masse d'au moins un acide carboxylique ayant une température de point de fusion sans décomposition T>+100°C et/ou ses produits d'estérification ayant une température de point de fusion sans décomposition T>+100°C.

13. Préparation thermoplastique de métal noble brillant selon l'une des revendications 1 à 12, **caractérisée en ce que** le système liant contient en outre par rapport à la préparation jusqu'à 10 % en masse de colorants, d'agents de thixotropie, d'additifs ou d'autres adjuvants de mise en oeuvre.

14. Préparation thermoplastique de métal noble brillant selon l'une des revendications 1 à 13, **caractérisée en ce qu'**au moins deux éléments du groupe Rh, Cu, Co, Zr, Bi, Cr, Si, B, Al, Ti, Ca, V, Zn, Fe, Ce, Mo, Os, In, Ba, Ta, W, Li, Na, K, Ca, Mn, Ni, Ir, Ge, Pb, Sr, Ru, Ge et Mg sont contenus sous forme de composés organiques, où la teneur de ces métaux peut atteindre dans chaque cas 0,4 mole par mole de métal noble.

15. Procédé de production d'un substrat silicaté comportant un décor de métal noble, **caractérisé par** :
- l'impression thermoplastique d'une préparation de métal noble brillant selon l'une des revendications 1 à 14 sur un substrat silicaté ; et
- la calcination de la préparation sur le substrat.

16. Utilisation d'une préparation thermoplastique du métal noble brillant selon l'une des revendications 1 à 14 pour la production de décors de métal noble sur des substrats silicatés par impression thermoplastique puis calcination.

17. Substrat silicaté comportant un décor de métal noble produit par un procédé selon la revendication 15.
